# EUROPÄISCHE PATENTSCHRIFT

(11) **EP 0 536 625 B1**
(45) Veröffentlichungstag und Bekanntmachung des Hinweises auf die Patenterteilung: **05.07.1995**
(21) Anmeldenummer: 92116642.7
(22) Anmeldetag: 29.09.1992
(51) Int. Cl.: B23K 26/00, B23K 26/02, B23K 26/04, G05B 19/408

(54) **Verfahren zur Strukturierung von Werkstückoberflächen mit einem Laserstrahl**
Laser structuring method of surface workpieces
Méthode de structuration de surfaces de pièces en utilisant un rayon laser

(30) Priorität: 10.10.1991 DE 4133620
(43) Veröffentlichungstag der Anmeldung: 14.04.1993
(73) Patentinhaber: LCTec Laser- und Computertechnik GmbH, D-87459 Pfronten (DE)
(72) Erfinder: Eberl, Günter, Dr., W-8961 Betzigau (DE); Hildebrand, Peter, W-8962 Pfronten (DE); Wrba, Peter, Dr., W-8957 Unterthingau (DE); Neumaier, Josef, W-8962 Pfronten-Steinach (DE)
(74) Vertreter: Beetz & Partner Patentanwälte

(56) Entgegenhaltungen:
- EP-A- 0 303 706
- EP-A- 0 370 967
- GB-A- 2 242 760
- US-A- 4 769 523

## Beschreibung

Die Erfindung betrifft ein Verfahren zur Strukturierung von Werkstückoberflächen mit einem Laserstrahl gemäß den Oberbegriffen der unabhängigen Patentansprüche 1, 2 und 11, wobei ein kontinuierlicher oder gepulster Laserstrahl die jeweils zu bearbeitende Werkstückoberfläche längs einer durch eine Steuereinheit vorgegebenen Spurlinie überfährt.

Bei einer Vielzahl von Gebrauchsgegenständen aus beispielsweise Kunststoff sollen die jeweiligen Oberflächen aus optischen oder anderen Gründen eine bestimmte Struktur aufweisen, beispielsweise einen gleichmäßigen Rauhigkeitsgrad, eine verschiedenartigen Lederarten entprechende Struktur oder auch eine feinporige Beschaffenheit haben. Zum Erhalt dieser Oberflächenstrukturen mußten die jeweiligen Formen, Walzen oder anderen formgebenden Elemente in aufwendiger Weise entweder spanabhebend, durch Ätzmittel, durch Sandstrahlen oder dgl. bearbeitet werden.

Aus der US-4 758 705 ist ein gattungsgemäßes Verfahren zur Strukturierung einer Quetschwalze für Fotoapparate bekannt. Die Strukturierung erfolgt mit einem über die Walzenoberfläche geführten gepulsten Laserstrahl, wobei die Walze in eine Drehvorrichtung eingespannt ist. Der Laserstrahl und die Walze werden mit einer Steuereinheit derart gesteuert, daß ein vorbestimmtes Muster in die Walze eingeprägt wird. Ein solches Muster weist jedoch eine regelmäßige Struktur auf, so daß eine Verwendung der strukturierten Oberfläche, z.B. als Naturstoffimitat, unmöglich ist.

Aus der nachveröffentlichten DE 41 02 984 A1 ist ein Verfahren zur Erzeugung einer Oberflächenstruktur auf einer Walze bekannt, wobei mit einem Elektronenstrahl der Durchmesser und die Tiefe von Ausnehmungen einer Walze von einer Steuereinheit gesteuert werden kann. Durch einen Zufallsgenerator kann weiterhin die Struktur einer Ausnehmung in einer räumlichen Dimension festgelegt werden. Gemäß dieser Druckschrift werden Strukturen ähnlich der Stahlkiesbearbeitung simuliert, deren Generierung jedoch eine relativ hohe Rechenzeit benötigt. Weiterhin sind die erzeugten Strukturen nicht für die Imitation von unregelmäßigen Zufallsstrukturen, wie z.B. Leder, geeignet.

Aufgabe der Erfindung ist es, ein Verfahren zur Strukturierung von Werkstückoberflächen mit einem Laserstrahl zu realisieren, das die Herstellung verschiedenartiger Oberflächenstrukturen bei Verwendung unterschiedlicher Werkstoffmaterialien schnell und auf technisch einfache Weise ermöglicht.

Diese Aufgabe wird erfindungsgemäß durch die Merkmale der unabhängigen Patentansprüche 1, 2 und 11 gelöst. Die abhängigen Patentansprüche kennzeichnen vorteilhafte Weiterbildungen und Ausgestaltungen der Erfindung.

Erfindungsgemäß können auf der zu bearbeitenden Oberfläche Bahnkurven festgelegt und durch Sollpunkte in diskrete Teilstücke unterteilt werden. Um jeden Sollpunkt kann ein elliptischer oder kreisförmiger Flächenbereich festgelegt werden, wobei in jedem dieser Flächenbereiche willkürlich ein Spurpunkt, z.B. mittels eines Zufallsgenerators, ausgewählt wird. Durch Verbinden der so ausgewählten Spurpunkte wird eine Spurlinie erhalten, die vom Laser abgefahren wird, so daß in der Werkstückoberfläche ein entsprechender Linienzug entsteht. Durch entsprechende Wahl der Größe der Teilstücke und/oder der Größe der elliptischen oder kreisförmigen Flächenbereiche sowie durch vielfaches Wiederholen dieser Vorgänge ggf. in unterschiedlichen Richtungen wird eine hohe Anzahl von sich ggf. schneidenden Linien auf der Werkstückoberfläche erzeugt, so daß eine Oberflächenstruktur mit etwa gleichbleibender Rauhigkeit entsteht. Bei Verwendung von gepulsten Lasern können auf diese Weise Oberflächenstrukturierungen mit einem bisher meist nur durch Sandstrahlen erzielten Charakter erhalten werden.

Gemäß der Erfindung lassen sich auch Oberflächenstrukturen auf Werkstücken aus z.B. Metall, Keramik, Glas, Kunststoff oder dgl. erzielen, die einen lederartigen Charakter in abzuformenden Kunststoffartikeln haben. Hierzu werden erfindungsgemäß auf der Werkstückoberfläche Aussparungsbereiche willkürlich festgelegt, in denen keine Bearbeitung erfolgen soll. Am Anfangspunkt einer Bearbeitungsspur wird ferner eine Sollstrecke nach Länge und Richtung festgelegt. Am Endpunkt jeder Sollstrecke wird ein elliptischer oder kreisförmiger Flächenbereich festgelegt, in welchem ein Spurpunkt willkürlich ausge-wählt wird. Dieser Spurpunkt darf jedoch nicht in einem der auszusparenden, d.h. nicht zu bearbeitenden, Aussparungsbereiche liegen. Wurde ein gültiger Spurpunkt bestimmt, dann wird dieser vom Laser angefahren und/oder in einer geeigneten Steuereinheit abgespeichert. Dieser so bestimmte Spurpunkt bildet dann den Ausgangspunkt für die nächstfolgende Sollstrecke, die wiederum nach Länge und Richtung willkürlich festgelegt werden kann. Diese Vorgänge wiederholen sich so oft, bis der Rand der zu bearbeitenden Werkstückoberfläche erreicht ist. Daran schließen sich weitere Bearbeitungszyklen auf benachbarten Spuren an, bis die gesamte zu bearbeitende Werkstückoberfläche mit einer Vielzahl von unregelmäßig verlaufenden und sich eventuell überschneidenden Linien überzogen ist, wobei jedoch diese Linien nicht über die zuvor festgelegten Aussparungsbereiche verlaufen.

Gemäß einer zweckmäßigen Ausgestaltung der Erfindung kann die vorstehend angegebene Bearbeitung in einer anderen Vorzugsrichtung wiederholt werden, wozu lediglich das Werkstück um einen entsprechenden Winkel verdreht wird.

Die Abmessungen der Aussparungsbereiche ebenso wie der elliptischen bzw. kreisförmigen Flächenbereiche können willkürlich festgelegt werden oder auch jeweils untereinander gleich sein.

Weiterhin kann die Sollrichtung einer jeden Sollstrecke dynamisch innerhalb einer Spurlinie verändert werden. Dazu kann ein Winkel-Offset eingesetzt werden, der asymptotisch bis zu einem vorbestimmten Winkel-Offset-Grenzwert variiert wird. Der Winkel-Offset-Grenzwert kann vor der Abarbeitung einer neuen Spurlinie jeweils neu festgelegt werden. Dadurch können in vorteilhafter Weise hautähnliche Oberflächenstrukturen geschaffen werden.

Durch eine intermittierend bearbeitete, eventuell mehrfach abgefahrene, Spurlinie, wobei die Längen- und Pausenbereiche innerhalb jeweilig vorbestimmten Grenzwerten mit einem Zufallsgenerator eingestellt werden können, können unterschiedlich tiefe Spuren in die zu bearbeitende Werkstückoberfläche eingeprägt werden.

Gemäß einer weiteren Ausgestaltung der Erfindung kann bei der willkürlichen Ermittlung der Spurpunkte, die nicht in dem Aussparungsbereichen liegen, eine vorgegebene Maximal-Anzahl an Versuchen zur Überwindung dieses Aussparungsbereichs eingeführt werden. Nach einem Überschreiten dieser Maximal-Anzahl kann dann der Vorgang abgebrochen werden. Danach kann mit der Bearbeitung einer nächsten Spurlinie begonnen werden. Durch die Einführung der Maximal-Anzahl kann die Rechenzeit verringert und es können andere tierhautähnliche Strukturen erzielt werden.

Gemäß einer weiteren Ausführungsform der Erfindung kann beim Verlassen eines zu strukturierenden Bereichs der Werkstückoberfläche die Sollrichtung der Spurlinie für den Beginn des nächsten zu strukturierenden Bereichs der Werkstückoberfläche beibehalten werden. Dadurch können Nahtstellen zwischen Strukturbereichen durch ein Aufeinanderzuführen der Spurlinien in den Randbereichen der Strukturbereiche unsichtbar gemacht werden, wodurch ein nahtloser Übergang der Spurlinien erzielt werden kann. Dies kann dadurch erreicht werden, daß eine generierte Rechts/Links- bzw. Oben/Unten-Symmetrie erzeugt wird, wobei bei dem Verlassen eines Strukturbereichs die Sollrichtung beibehalten wird. Die neuen Anfangskoordinaten und die neue Richtung von ineinanderführenden Spurlinien können im nächsten bearbeiteten Strukturbereich aus den Endkoordinaten und der alten Richtung des alten Strukturbereichs gebildet werden.

Ein bevorzugtes Anwendungsgebiet des erfindungsgemäßen Verfahrens stellt der Formenbau dar, um insbesondere Kunststoffartikel mit einer gewünschten Oberflächenstruktur zu versehen. Weiterhin läßt sich das erfindungsgemäße Verfahren auch zur Oberflächenbearbeitung von Walzen und Preßplatten anwenden, um durchlaufende formbare Artikel, wie Kunststoffbänder, zu strukturieren.

Erfindungsgemäß kann der zu strukturierende Oberflächenbereich weiterhin mit einer Matrix überzogen werden, wobei jedes Element der Matrix entsprechend veränderbaren Zufallswerten gesetzt werden kann. Diese Zufallswerte geben die Wahrscheinlichkeit einer Belegung bzw. des Setzens des Elementes der Matrix an. Ein gesetztes Element wiederum hat eine Laserbearbeitung an dieser Stelle zur Folge. Die entsprechend dem jeweiligen Zufallswert gesetzten Elemente der Matrix können zur Strukturierung der Werkstückoberfläche vom Laserstrahl angefahren werden, wobei vorteilhafterweise eine Linienzug-Abarbeitung der gesetzten Elemente zur Anwendung kommen kann. Dazu kann zuerst ein gesetztes Element der Matrix gesucht werden, wobei ein gesetztes Element der Matrix einem Spurpunkt der Spurlinie entspricht. Anschließend kann ein benachbarter Spurpunkt gesucht werden, usw. Bei der Suche nach den angrenzenden gesetzten Elementen können verschiedene Suchstrategien zur Anwendung kommen, z.B. kann nach gesetzten Nachbarelementen im und gegen den Uhrzeigersinn oder mit einer zufälligen Reihenfolge gesucht werden. Wurde ein benachbartes gesetztes Element gefunden, so kann der Laser eingeschaltet und auf das Nachbarelement positioniert werden, wobei die Suche nach dem nächsten Nachbarelement fortgesetzt wird. Schon angefahrene gesetzte Elemente der Matrix können gekennzeichnet werden. Wird kein Nachbarelement gefunden, so wird ein neues gesetztes Element gesucht und die obige Linienabarbeitung kann fortgesetzt werden, bis alle gesetzten Elemente bearbeitet wurden.

Durch eine derartige Strukturierung können in besonders vorteilhafter Weise gleichmäßige, flächendeckende Oberflächenstrukturen geschaffen werden, die insbesondere für Einwachs-Strukturen von Prothesen verwendet werden können. Dort sind in einem definierten Bereich geeignete Strukturen aufzubringen, in die das umgebende Gewebe einwachsen kann, wobei zu große unbearbeitete Flächenteile von Nachteil sind. Die erfindungsgemäß erzeugten zufallsmodulierten Strukturen fördern nicht nur den Einwachsprozeß des Gewebes, sondern vermindern auch die auftretende Kerbwirkung der eingeprägten Nut im Vergleich zu regelmäßigen Strukturen. Dadurch kann die Zug-, Biege- und Torsionsfestigkeit einer implantierten Prothese verbessert werden.

Erfindungsgemäß können die gesetzten Elemente der Matrix, d.h. die Spurpunkte, mit einem Zufallsgenerator gesetzt werden, wobei der Zufallsgenerator einen Zufallsbetrag ermittelt, der mit dem Wahrscheinlichkeitswert einer Belegung eines Elements der Matrix, d.h. einem Überdeckungsgrad, verglichen werden kann, wobei das Element der Matrix als Spurpunkt gesetzt wird, wenn der Zufallsbetrag des Zufallsgenerators kleiner als der Überdeckungsgrad ist. Dadurch kann in vorteilhafter Weise eine zufallsmodulierte Struktur erzeugt werden, die keine übermäßig großen Freiflächen aufweist.

Gemäß einer weiteren zweckmäßigen Ausgestaltung der Erfindung können die Koordinaten der Elemente der Matrix entsprechend eines Off-lattice-Faktors innerhalb eines vorbestimmten Bereichs verschoben werden. Durch das Verschieben der Koordinaten der Elemente der Matrix können die diskreten Sollrichtungen der Spurlinie stufenlos aufgeweicht werden, wodurch die Sollrichtungen gleichmäßiger über die Matrix verteilt werden können. Bei einem relativ großen eingestellten Off-lattice-Faktor können sich die Spurlinien überschneiden, was sonst nicht der Fall ist. Durch dieses Überschneiden der Spurlinien können verschiedene Tiefen der Oberflächenstruktur erreicht werden, was für die Strukturierung von z.B. Prothesenoberflächen von Vorteil sein kann, da dies den Einwachsvorgang des Gewebes begünstigen kann.

Im folgenden wird die Durchführung des Verfahrens anhand der Zeichnungen ausführlicher beschrieben. Es zeigen:
- Fig. 1a bis f: verschiedene Phasen der Bearbeitungsvorgänge zur Herstellung einer aus Bahnkurven bestehenden flächigen Struktur,
- Fig. 2a bis c: verschiedene erfindungsgemäß hergestellte Oberflächenstrukturen,
- Fig. 3: das schematische Vorgehen zum Erhalt von Oberflächenstrukturen mit Aussparungsbereichen,
- Fig. 4a bis e: verschiedene Phasen der Bearbeitung bei Anwendung des Prinzips nach Fig. 3,
- Fig. 4f: eine ähnliche Oberflächenstruktur wie Fig.4a bis c, und
- Fig. 5: eine auf der Werkstückoberfläche gebildete Matrix (m x n), und
- Fig. 6a bis f: Oberflächenstrukturen mit einem von a bis f ansteigenden Überdeckungsgrad.

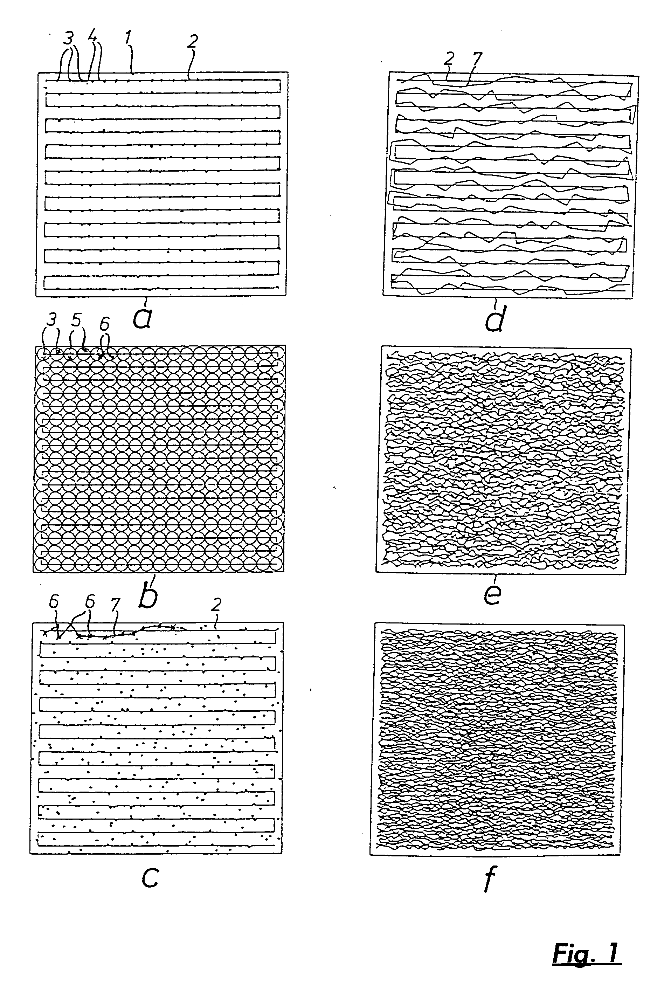

Zum Erhalt der Oberflächenstruktur gemäß Fig. 1f wird eine in Fig. 1a dargestellte mäanderförmige Bahnkurve 2 auf der zu bearbeitenden Werkstückoberfläche 1 festgelegt, wobei dieser Vorgang entweder auf der Fläche selbst oder aber elektronisch in einem Speicher einer Steuereinheit, auf einem mit einem Rechner gekoppelten Bildschirm oder dgl. erfolgen kann. Anschließend werden auf dieser mäanderförmigen Bahnkurve 2 Sollpunkte 3 festgelegt, die zweckmäßig gleiche Abstände haben und durch die die gesamte Bahnkurve 2 in diskrete Teilstrecken 4 unterteilt wird. In einem folgenden Vorgang werden um diese Sollpunkte 3 als jeweilige Mittelpunkte kreisförmige Flächenbereiche 5 festgelegt, deren Durchmesser der Länge der Teilstrecke 4 entsprechen kann (vgl. Fig. 1b). Statt dieser Kreise können auch andere geometrisch bestimmte Flächenbereiche, wie Ellipsen, gewählt werden. Mittels eines Zufallsgenerators wird anschließend in jedem dieser Flächenbereiche 5 je ein Spurpunkt 6 festgelegt. Die Verbindungslinie dieser Spurpunkte 6 bildet dann die vom Laser tatsächlich abzufahrende Spurlinie 7, wie sie in Fig. 1d dargestellt ist. Durch mehrmaliges Wiederholen dieser vorstehend beschriebenen Vorgänge entsteht ein linienförmiges Oberflächenmuster, das in den Fig. 1e und 1f dargestellt ist. Kennzeichen dieses Musters ist der einer Vorzugsrichtung (hier der Horizontalen) folgende Verlauf einer ansonsten willkürlich vielzackigen Spurlinie 7. Weitere Effekte können erzielt werden, indem das Werkstück um 90° gedreht und die vorstehend beschriebenen Vorgänge wiederholt werden. In diesem Fall ergibt sich eine Vielzahl von Kreuzungspunkten der gezackten Spurlinien.

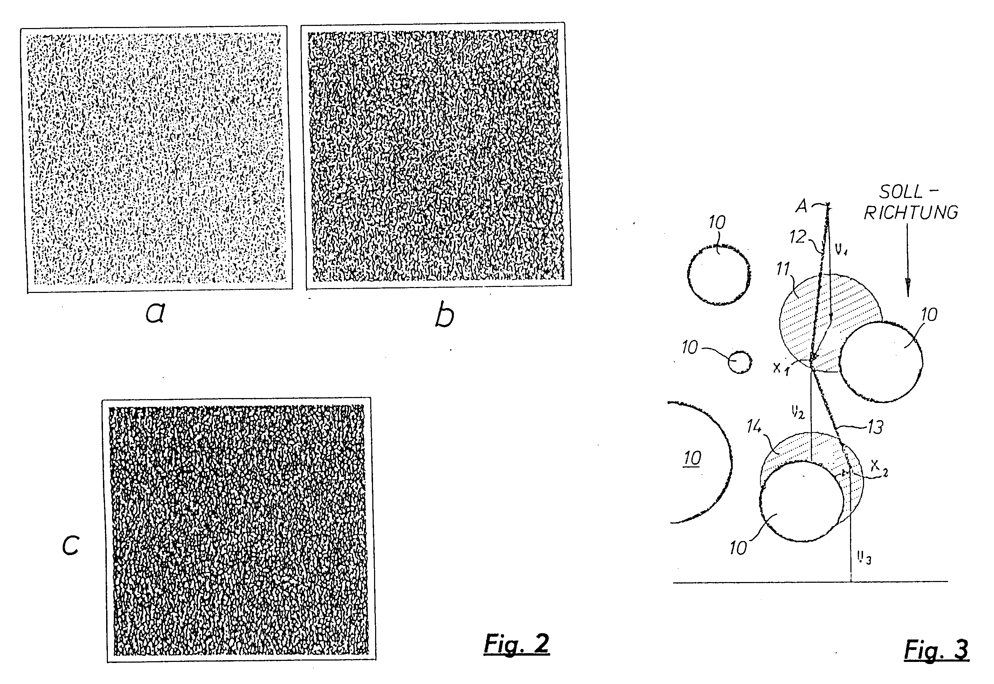

Wenn nach dem vorstehend beschriebenen Verfahren kein kontinuierlicher Laser, sondern ein gepulster Laser verwendet wird, können Oberflächenstrukturen erzielt werden, wie sie in den Fig. 2a bis c dargestellt sind.

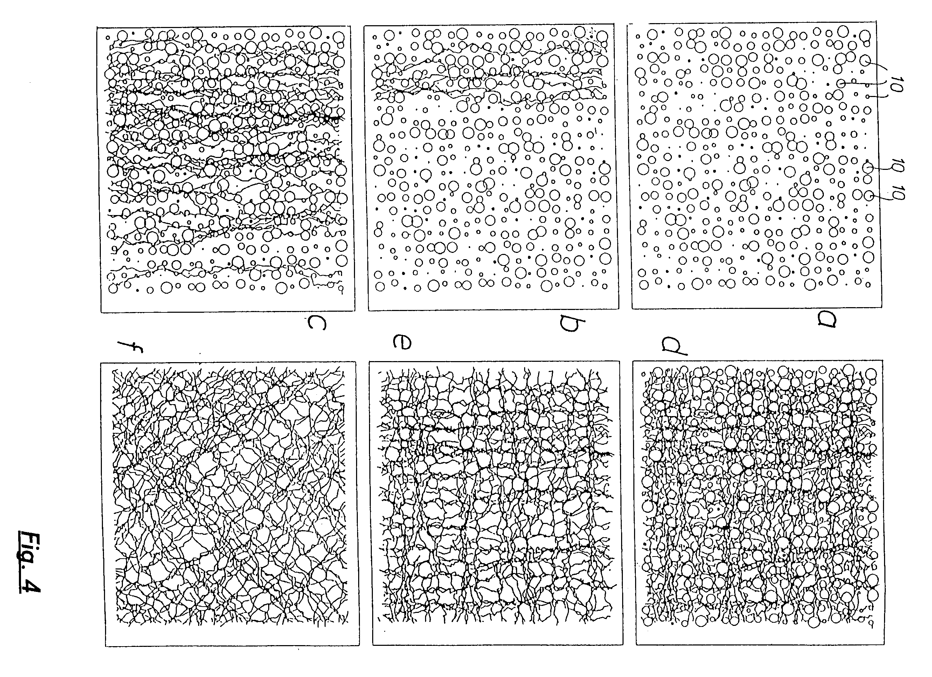

Gemäß der Erfindung können jedoch auch besondere Strukturen auf einer Werkstückoberfläche 1 hergestellt werden, die Oberflächenstrukturen von Naturprodukten, wie Leder, Steinen, Kork oder dgl. sowie Textilien ähnlich sind. Zum Erhalt derartiger Strukturierungen wird wie folgt vorgegangen. Vorab wird die Anzahl an Spurlinien 7 sowie deren Anfangspunkte A auf der zu bearbeitenden Werkstückoberfläche 1 festgelegt und ggf. elektronisch gespeichert. In einem nächsten Schritt werden Aussparungsbereiche 10 auf der gesamten zu bearbeitenden Werkstückoberfläche 1 in willkürlicher Verteilung festgelegt, die, wie in Fig. 3 dargestellt, in Form und Größe voneinander verschieden sein können. Diese Aussparungsbereiche sollen unbearbeitet bleiben, um einen besonderen optischen Eindruck der fertig bearbeiteten Oberfläche zu erzielen. Eine geeignete Möglichkeit zur Festlegung der Aussparungsbereiche 10 ist die anhand der Fig. 1a bis c beschriebene Ermittlung von willkürlichen Spurpunkten, die jedoch im vorliegenden Fall die Mittelpunkte der Aussparungsbereiche 10 darstellen. Um diese Mittelpunkte werden die Aussparungsbereiche 10 bei der Ausführung nach Fig. 3 in Form von Kreisen mit willkürlich gewählten Radien definiert. In einem weiteren Verfahrensschritt wird anschließend die Anzahl der für die herzustellende Oberflächenstruktur erforderlichen Spurlinien sowie die Amplitude der maximalen Spurabweichung und schließlich der Startpunkt A jeder Spurlinie festgelegt. Anschließend erfolgt die Festlegung einer pauschalen Sollrichtung für die Spur. Von dem Ausgangspunkt A jeder Spurlinie wird ein Vektor V von vorgegebener Länge in der Spurrichtung bestimmt. Um den Endpunkt dieses Vektors V wird ein geometrisch bestimmtes Flächenelement, im vorliegenden Fall ein kreisförmiger Flächenbereich 11, bestimmt, dessen Radius der Amplitude der maximalen Spurabweichung entspricht. Mit Hilfe eines Zufallsgenerators wird anschließend ein Spurpunkt X₁ am Umfang des kreisförmigen Flächenbereichs 11 bestimmt. Falls dieser Punkt X₁ in einem der Aussparungsbereiche 10 liegt, wird die Punktermittlung im Zufallsgenerator wiederholt, und zwar jeweils so oft, bis ein Spurpunkt X₁ innerhalb der in Fig. 3 schraffierten Kreisfläche gefunden worden ist. Dieser Spurpunkt X₁ bildet den Endpunkt eines Spurabschnitts 12 und gleichzeitig den Ausgangspunkt für einen weiteren Spurabschnitt 13. Zum Erhalt dieses Spurabschnitts 13 wird wiederum ein Vektor V₂ in Sollrichtung festgelegt, um dessen Endpunkt ein weiterer kreisförmiger Flächenbereich 14 gezogen wird. In diesem Flächenbereich 14 wird mittels einer erneuten Zufallsgenerator-Operation ein Spurpunkt X₂ ermittelt, der außerhalb des Aussparungsbereichs 10 im Flächenbereich 14 liegt. Dieser Spurpunkt X₂ bildet den Endpunkt der Spurstrecke 13 und den Ausgangspunkt für einen weiteren Vektor V₃. Diese Vorgänge werden solange wiederholt, bis der gegenüberliegende Rand der zu bearbeitenden Werkstückoberfläche 1 erreicht ist. Durch aufeinanderfolgendes Abfahren der Punkte A, X₁, X₂ bis Xₙ mit dem Laserstrahl entsteht eine zickzackförmige Spurlinie, die keinen der Aussparungsbereiche 10 schneidet oder berührt. Ein solcher Vorgang ist in Fig. 4b dargestellt, wobei sich der Fig. 4a die Verteilung und Anordnung der Aussparungsbereiche 10 auf der Werkstückoberfläche 1 entnehmen läßt. Die Fig. 4c bis 4e zeigen weitere Phasen der Oberflächenstrukturierung, wobei in den Fig. 4c und 4d die Aussparungsbereiche 10 als Kreise dargestellt sind. Eine weitere Besonderheit der Strukturierung kann noch dadurch erzielt werden, daß nach der Oberflächenbearbeitung in einer Vorzugsrichtung das Werkstück um 90° gedreht wird und die Bearbeitungsvorgänge in einer anderen Vorzugsrichtung erneut vorgenommen werden. Entsprechende Muster bzw. Strukturierungen sind in den Fig. 4e und 4f dargestellt.

Bei den vorstehend beschriebenen Vorgehensweisen können Variationen auf verschiedene Art erzielt werden. Werden beispielsweise die Abmessungen der Flächenbereiche für die maximalen Abweichungsamplituden größer als die Abstände zwischen den Sollpunkten 3 gemäß Fig. 1 gewählt, dann schneiden sich die zickzackförmigen Spurlinien, wobei in den Kreuzungspunkten das Material in einer größeren Tiefe abgetragen wird. Daneben kann die Breite der jeweiligen vom Laser herausgearbeiteten Spurlinie konstant gehalten werden, indem die Laserleistung und auch der Abstand zwischen dem Laserfokus und der Werkstückoberfläche konstant gehalten werden. Zur Erzielung besonderer Wirkungen ist es jedoch auch möglich, entweder die Laserleistung oder aber den Abstand zwischen dem Laserfokus und der Werkstückoberfläche kontinuierlich oder sprunghaft während der Bearbeitung zu ändern, was Änderungen in der Spurbreite und auch in der Spurtiefe zur Folge hat.

Gleichmäßige, flächendeckende Strukturen werden, außer für Naturflächenimitationen, auch für Einwachs-Strukturen bei Prothesen benötigt. Für diese Prothesen müssen gezielte Vertiefungen oder Rauhigkeiten erzeugt werden, so daß dann das umgebende Gewebe einwachsen kann. Hierbei ist insbesondere darauf zu achten, daß die Oberflächenstruktur der Prothese keine großen unbearbeiteten Flächenanteile aufweist, da dies den Einwachsvorgang des Gewebes behindert.

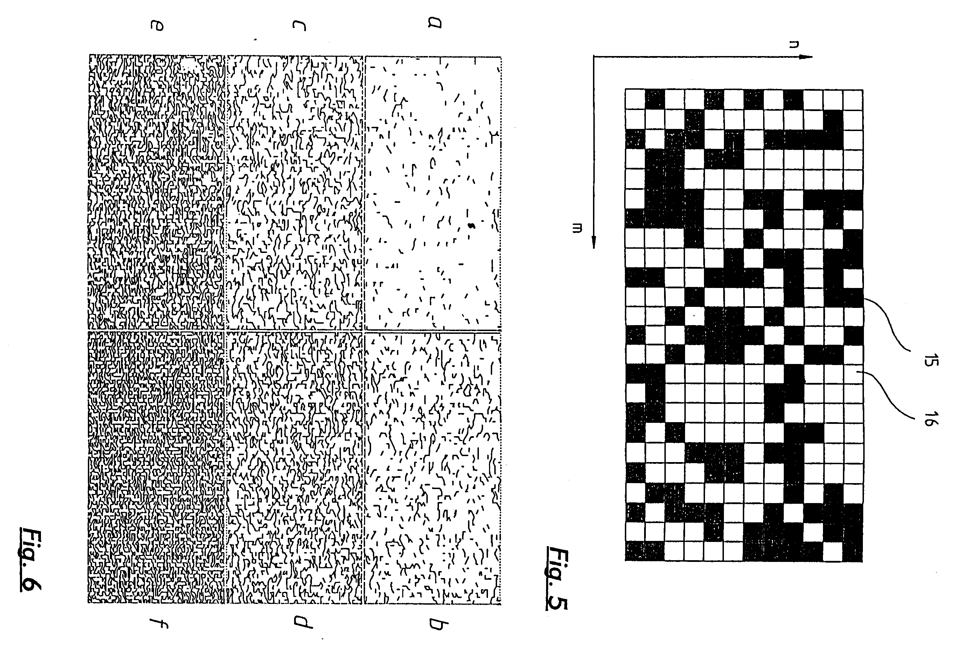

Zur Bildung einer solchen Einwachs-Struktur wird die Werkstückoberfläche 1 mit einer Matrix (m x n) überzogen, wie in Fig. 5 gezeigt. Hierbei sind gesetzte Elemente 15 der Matrix (m x n) als ein ausgefülltes Feld gezeigt, während nicht gesetzte Elemente 16 der Matrix (m x n) als nicht ausgefülltes Feld dargestellt sind. Das Verhältnis zwischen der Anzahl der gesetzten Elemente 15 und der Gesamtzahl der Elemente entspricht einem vorbestimmten Überdeckungsgrad der Matrix (m x n), wobei ein Überdeckungsgrad von 60 % bedeutet, daß 60 % der Elemente der Matrix (m x n) gesetzte Elemente 15 und 40 % der Elemente der Matrix (m x n) nicht gesetzte Elemente 16 sind. Zur Ermittlung der gesetzten Elemente 15 wird für jedes Element der Matrix (m x n) durch einen Zufallsgenerator ein Wert zwischen 0 und 1 zufällig ermittelt und z.B. bei einem eingestellten Überdeckungsgrad von 60 % mit dem Wert 0,6 verglichen. Wenn der Zufallsbetrag kleiner oder gleich 0,6 ist, so gilt dieses Element als gesetztes Element 15, im anderen Fall als nicht gesetztes Element 16. Dadurch wird eine zufällige Verteilung an gesetzten Elementen 15 entsprechend dem eingestellten Überdeckungsgrad erzielt. Zum Abarbeiten der gesetzten Elemente 15 wird z.B. an dem oberen linken Feld (1,1) der Matrix (m x n) angefangen, ein gesetztes Element 15 zu suchen. Wie in Fig. 5 dargestellt, ist jedoch das Element (1,1) der Matrix (m x n) ein nicht gesetztes Element 16. Daher kann die Suche zeilenweise fortgesetzt werden, bis auf ein gesetztes Element 15 gestoßen wird, das einem Spurpunkt entspricht. Benachbarte Spurpunkte 15 werden nun z.B. im Uhrzeigersinn oder gegen den Uhrzeigersinn um das gesetzte Element 15 herum gesucht. Es können jedoch auch andere Suchstrategien für benachbarte gesetzte Elemente 15 angewandt werden, so z.B. zuerst eine horizontale, dann eine vertikale und anschließend eine diagonale Suche, oder umgekehrt. Weiterhin ist auch eine zufällige Reihenfolge der Suche von benachbarten gesetzten Elementen 15 denkbar. Gesetzte Elemente 15 werden nur einmal vom Laser angefahren, so daß eine gleichmäßige Bearbeitungstiefe der Struktur erzielt wird. Sobald kein benachbartes gesetztes Element 15 gefunden wird, wird der Bearbeitungsvorgang abgebrochen und ein neues, nicht benachbartes gesetztes Element 15 wird gesucht. Dieser Suchvorgang kann wiederum bei dem Element (1,1) der Matrix (m x n) beginnen. Es kann jedoch auch jeder andere Suchanfangspunkt der Matrix (n x m) verwendet werden. Auch hierbei können verschiedene Suchstrategien für neue gesetzte Elemente 15 zur Anwendung kommen.

In den Fig. 6a-f sind Einwachs-Strukturen gezeigt. Hierbei wurde der Überdeckungsgrad der Matrix (m x n) derart variiert, daß er ausgehend von Fig. 6a bis zu Fig. 6f ansteigt.

Durch eine Fahrwegoptimierung des Lasers kann die benötigte Bearbeitungszeit einer zu strukturierenden Werkstückoberfläche weiter minimiert werden. Hierbei werden vor Beginn der Bearbeitung durchgehende Spurlinien auf dem Werkstück gesucht und derart verknüpft, daß eine optimierte Laufzeit bei der Bearbeitung resultiert.

Das Verfahren zur Erzeugung der Einwachs-Strukturen kann natürlich auch für alle anderen Oberflächenstrukturen verwendet werden, die zufallsmodulierte Strukturen ohne große unbearbeitete Freiflächen benötigen, z.B. zur optimalen Verankerung eines Fremdmaterials auf dem Werkstück.

Wie oben ausgeführt, können nach dem erfindungsgemäßen Verfahren nicht nur ebene Oberflächen, sondern auch dreidimensional gewölbte Flächen strukturiert werden. Ein wesentlicher Vorzug ist dabei die hohe Bearbeitungsleistung des Lasers. Demgemäß können auch relativ große Oberflächenbereiche in bisher nicht erzielbaren kurzen Bearbeitungszeiten mit beliebigen Mustern strukturiert werden.

## Patentansprüche

1. Verfahren zur Strukturierung von Werkstückoberflächen (1) mit einem Laserstrahl, der durch eine Steuereinheit längs einer durch Spurpunkte (6) vorgegebenen Spurlinie (7) auf der zu bearbeitenden Werkstückoberfläche (1) geführt wird, dadurch gekennzeichnet, daß
die Steuereinheit die folgenden Schritte durchführt:
- Bestimmen von Bahnkurven (2)
- Bestimmenn von Sollpunkten (3), die die Bahnkurve (2) in diskrete Teilstrecken (4) unterteilen,
- Bestimmen eines jedem Sollpunkt (3) zugeordneten elliptischen oder kreisförmigen Flächenbereichs (5) und
- Ermitteln eines Spurpunkts (6) in jedem Flächenbereich (5) durch willkürliche Auswahl.

2. Verfahren zur Strukturierung von Werkstückoberflächen (1) mit einem Laserstrahl, der durch eine Steuereinheit längs einer durch Spurpunkte (X₁, Xₙ) vorgegebenen Spurlinie (7) auf der zu bearbeitenden Werkstückoberfläche (1) geführt wird,
dadurch gekennzeichnet, daß
die Steuereinheit die folgenden Schritte durchführt:
(a) Bestimmen der Lage und Abmessung willkürlich festgelegter Aussparungsbereiche (10) auf der Werkstückoberfläche (1), in denen keine Bearbeitung erfolgen soll,
(b) Bestimmen eines Anfangspunkts (A) der Spurlinie (7) und der Länge und Richtung einer Sollstrecke (V₁, Vₙ),
(c) Bestimmen eines elliptischen oder kreisförmigen Flächenbereichs (11, 14) am Endpunkt jeder Sollstrecke (V₁, Vₙ),
(d) Ermitteln eines Spurpunkts (X₁, Xₙ)in dem zuvor bestimmten Flächenbereich (11, 14), der nicht in einem Aussparungsbereich (10) liegt durch willkürliche Auswahl,
(e) Wiederholen der Schritte (b) - (d), wobei der Anfangspunkt (A) der jeweilige Spurpunkt (X₁, Xₙ) ist.

3. Verfahren nach Anspruch 2,
dadurch gekennzeichnet, daß
zur Festlegung der Aussparungsbereiche (10) auf der zu bearbeitenden Werkstückoberfläche (1) eine vorgewählte Anzahl von vorzugsweise parallelen Linien festgelegt wird und auf jeder dieser Linien Koordinaten von Punkten vorgegeben werden, welche die Mittelpunkte für die Aussparungsbereiche (10) bilden.

4. Verfahren nach Anspruch 2 oder 3,
dadurch gekennzeichnet, daß
die Aussparungsbereiche (10) kreisförmig ausgebildet sind.

5. Verfahren nach einem der Ansprüche 2 bis 4,
dadurch gekennzeichnet, daß
die Abmessungen der Aussparungsbereiche (10) willkürlich gewählt werden.

6. Verfahren nach einem der Ansprüche 2 bis 5,
dadurch gekennzeichnet, daß
bei der willkürlichen Ermittlung der Spurpunkte (X₁, Xₙ) und einem Überschreiten einer vorbestimmten Maximal-Anzahl von Versuchen zur Überwindung der Aussparungsbereiche (10) der Vorgang abgebrochen und die nächste Spurlinie (7) angefahren wird.

7. Verfahren nach einem der Ansprüche 2 bis 6,
dadurch gekennzeichnet, daß
die Werkzeugoberfläche (1) in mehrere Bearbeitungsteilflächen unterteilt wird und beim Verlassen eines zu strukturierenden Bereichs der Werkstückoberfläche (1) die Sollrichtung der Spurlinie (7) für den Beginn der nächsten benachbarten zu strukturierenden Bearbeitungsteilfläche beibehalten wird.

8. Verfahren nach einem der Ansprüche 1 bis 7,
dadurch gekennzeichnet, daß
nach der Flächenbearbeitung in einer ersten Vorzugsrichtung mindestens eine andere Vorzugsrichtung vorgegeben wird, in der eine weitere Flächenbearbeitung vorgenommen wird.

9. Verfahren nach einem der Ansprüche 1 bis 8,
dadurch gekennzeichnet, daß
die Größen der Flächenbereiche (5, 11, 14) so gewählt werden, daß sich ihre Randzonen überlappen und sich die Spurlinien (7) kreuzen.

10. Verfahren nach einem der Ansprüche 1-9,
dadurch gekennzeichnet, daß
die Laserleistung und/oder der Abstand zwischen dem Laserfokus und der Werkstückoberfläche (1) während des Bearbeitungsvorgangs variiert und/oder Spurlinien (7) mehrfach abgefahren werden, wobei die Längen- und Pausenbereiche innerhalb vorbestimmter Grenzwerte willkürlich eingestellt werden.

11. Verfahren zur Strukturierung von Werkstückoberflächen (1) mit einem Laserstrahl, der durch eine Steuereinheit längs einer durch Spurpunkte (15) vorgegebenen Spurlinie (7) auf der zu bearbeitenden Werkstückoberfläche (1) geführt wird,
dadurch gekennzeichnet, daß
die Steuereinheit die folgenden Schritte durchführt:
(a) Bestimmen von Elementen einer von der Werkstückoberfläche (1) gebildeten Matrix (m x n),
(b) Festlegen eines Überdeckungsgrads der Matrix (m x n),
(c) Setzen der Elemente der Matrix (m x n) entsprechend des Überdeckungsgrads und eines Zufallswertes als Spurpunkte (15),
(d) Suchen eines Spurpunkts (15),
(e) Ermitteln eines benachbarten Spurpunkts (15),
(f) Wiederholen des Schrittes (e), bis kein benachbarter Spurpunkt (15) ermittelt werden kann, und
(g) Ausführen der Schritte (d) - (f), bis alle Spurpunkte (15) der Matrix (m x n) vom Laser angefahren wurden.

12. Verfahren nach Anspruch 11,
dadurch gekennzeichnet, daß
das Setzen der Spurpunkte (15) mit einem Zufallsgenerator erfolgt, wobei der Zufallsgenerator einen Zufallsbetrag ermittelt, der mit dem Überdeckungsgrad verglichen und das jeweilige Element der Matrix (m x n) als Spurpunkt (15) gesetzt wird, wenn der Zufallsbetrag kleiner als der Überdeckungsgrad ist.

13. Verfahren nach Anspruch 11 oder 12,
dadurch gekennzeichnet, daß
die Koordinaten der Elemente der Matrix (m x n) entsprechend eines Off-lattice-Faktors innerhalb eines vorbestimmten Bereichs verschoben werden.

## Claims

1. Method for structuring workpiece surfaces (1) by means of a laser beam which is guided by a control unit along a track line (7), which is predetermined by track points (6), on the workpiece surface (1) which is to be machined, characterised in that
the control unit performs the following steps:
- establishing path curves (2),
- establishing reference points (3) which divide the path curve (2) into discrete sub-sections (4),
- establishing an elliptical or a circular surface region (5) to be associated with each reference point (3) and
- determining a track point (6) in each surface region (5) by arbitrary selection.

2. Method for structuring workpiece surfaces (1) by means of a laser beam which is guided by a control unit along a track line (7), which is predetermined by track points (X₁, Xₙ), on the workpiece surface (1) which is to be machined,
characterised in that
the control unit performs the following steps:
(a) establishing the position and dimensions of arbitrarily fixed blank regions (10) on the workpiece surface (1) in which no machining is to take place,
(b) establishing a starting point (A) for the track line (7) and the length and direction of a reference section (V₁, Vₙ),
(c) establishing an elliptical or a circular surface region (11, 14) at the end point of each reference section (V₁, Vₙ),
(d) determining a track point (X₁, Xₙ) in the previously established surface region (11, 14) which does not lie in a blank region (10) by arbitrary selection,
(e) repeating the steps (b) - (d), with the starting point (A) being the respective track point (X₁, Xₙ).

3. Method according to claim 2, characterised in that,
in order to fix the blank regions (10) on the workpiece surface (1) which is to be machined, a preselected number of preferably parallel lines is fixed and coordinates of points which form the centre points for the blank regions (10) are predetermined on each of these lines.

4. Method according to claim 2 or 3, characterised in that the blank regions (10) are circular.

5. Method according to one of claims 2 to 4, characterised in that
the dimensions of the blank regions (10) are selected arbitrarily.

6. Method according to one of claims 2 to 5, characterised in that,
with the track points (X₁, Xₙ) being determined arbitrarily, when a preestablished maximum number of attempts to cross the blank regions (10) is exceeded the operation is discontinued and the next track line (7) is started.

7. Method according to one of claims 2 to 6, characterised in that
the workpiece surface (1) is divided into a plurality of sub-machining surfaces and, upon leaving a region of the workpiece surface (1) which is to be structured, the reference direction of the track line (7) is maintained for the beginning of the next adjacent sub-machining surface which is to be structured.

8. Method according to one of claims 1 to 7, characterised in that,
following the surface machining in a first preferred direction, at least one other preferred direction, in which an additional surface machining operation is undertaken, is predetermined.

9. Method according to one of claims 1 to 8, characterised in that
the dimensions of the surface regions (5, 11, 14) are selected such that their edge zones overlap and the track lines (7) intersect.

10. Method according to one of claims 1 - 9,
characterised in that
the laser power and/or the distance between the laser focus and the workpiece surface (1) is/are varied during the machining operation and/or track lines (7) are covered several times, the linear and interval regions being set arbitrarily within preestablished limits.

11. Method for structuring workpiece surfaces (1) by means of a laser beam which is guided by a control unit along a track line (7), which is predetermined by track points (15), on the workpiece surface (1) which is to be machined,
characterised in that
the control unit performs the following steps:
(a) establishing elements of a matrix (m x n) forming the workpiece surface (1),
(b) fixing a degree of overlap of the matrix (m x n),
(c) placing the elements of the matrix (m x n) as track points (15) according to the degree of overlap and a random value,
(d) locating a track point (15),
(e) determining an adjacent track point (15),
(f) repeating the step (e) until no adjacent track point (15) can be determined, and
(g) executing the steps (d) - (f) until all the track points (15) of the matrix (m x n) have been encountered by the laser.

12. Method according to claim 11, characterised in that the track points (15) are placed by a random generator, the latter determining a random amount which is compared with the degree of overlap, and the respective element of the matrix (m x n) being placed as the track point (15) if the random amount is smaller than the degree of overlap.

13. Method according to claim 11 or 12, characterised in that the coordinates of the elements of the matrix (m x n) are displaced within a preestablished range in accordance with an off-lattice factor.

## Revendications

1. Procédé pour la structuration de surfaces de pièces (1) à l'aide d'un rayon laser guidé, par l'intermédiaire d'une unité de commande, le long d'une ligne de trace (7) prédéterminée par des points de traces (6) sur la surface de la pièce (1) à usiner,
caractérisé en ce que l'unité de commande effectue les étapes suivantes:
- détermination des courbes de trajectoire (2)
- détermination des points théoriques (3) qui divisent la courbe de trajectoire (2) en sections de ligne discrètes (4),
- détermination d'une zone de surface (5) elliptique ou circulaire affectée à chaque point théorique (3) et
- définition d'un point de trace (6) dans chaque zone de surface (5) par un choix arbitraire.

2. Procédé pour la structuration de surfaces de pièces (1) à l'aide d'un rayon laser guidé, par l'intermédiaire d'une unité de commande, le long d'une ligne de trace (7) prédéterminée par des points de traces (xₗ, xₙ) sur la surface de la pièce (1) à usiner, caractérisé en ce que l'unité de commande réalise les étapes suivantes :
(a) détermination de la position et des dimensions des zones d'évidement (10) qui sont choisies de manière arbitraire sur la surface de la pièce (1) et dans lesquelles aucune opération d'usinage ne sera effectuée,
(b) détermination d'un point d'origine (A) de la ligne de trace (7) ainsi que de la longueur et de la direction d'un segment théorique (vₗ, vₙ),
(c) détermination d'une zone de surface (11, 14) elliptique ou circulaire au point d'extrémité de chaque segment théorique (vₗ, vₙ),
(d) définition d'un point de trace (xₗ, xₙ) dans la zone de surface (11, 14) précédemment déterminée, qui ne se trouve pas dans une zone d'évidement (10), par un choix arbitraire,
(e) répétition des étapes (b)-(d) le point d'origine (A) étant le point de trace (xₗ, xₙ) respectif.

3. Procédé selon la revendication 2, caractérisé en ce que pour définir les zones d'évidement (10) sur la surface de la pièce (1) à usiner un nombre prédéterminé de lignes de préférence parallèles est défini et que sur chacune de ces lignes, sont prédéfinies les coordonnées de points qui constituent les points centraux pour les zones d'évidement (10).

4. Procédé selon la revendication 2 ou 3,
caractérisé en ce que les zones d'évidement (10) ont une configuration circulaire.

5. Procédé selon l'une des revendications 2 à 4,
caractérisé en ce que les dimensions des zones d'évidement (10) sont choisies arbitrairement.

6. Procédé selon l'une des revendications 2 à 5,
caractérisé en ce que, lors de la recherche arbitraire des points de traces (xₗ, xₙ) et du dépassement d'un nombre maximum prédéterminé d'essais de franchissement des zones d'évidement (10), le processus est interrompu et la prochaine ligne de trace (7) est visée.

7. Procédé selon l'une des revendications 2 à 6,
caractérisé en ce que la surface de la pièce (1) est divisée en plusieurs surfaces d'usinage et que lors de l'abandon d'une zone à structurer de la surface de la pièce (1), la direction théorique de la ligne de trace (7) est conservée pour le début de la prochaine surface d'usinage adjacente à structurer.

8. Procédé selon l'une des revendications 1 à 7,
caractérisé en ce que, après l'usinage de la surface selon une première direction préférentielle, au moins une autre direction préférentielle est prédéfinie, selon laquelle est effectué un nouvel usinage de la surface.

9. Procédé selon l'une des revendications 1 à 8,
caractérisé en ce que les dimensions des zones de surface (5, 11, 14) sont choisies de sorte que leurs zones limites se chevauchent et que les lignes de de traces (7) se croisent.

10. Procédé selon l'une des revendications 1-9,
caractérisé en ce que la capacité du laser et/ou l'écart entre le foyer du laser et la surface de la pièce (1) varient au cours du procédé d'usinage et/ou que les lignes de traces (7) sont interrompues plusieurs fois de sorte que les longueurs et les intervalles sont fixés de façon arbitraire parmi les valeurs limites prédéfinies.

11. Procédé de structuration des surfaces de pièces (1) à l'aide d'un rayon laser dirigé, par l'intermédiaire d'une unité de commande, le long d'une ligne de trace (7) prédéterminée par des points de de traces (15) sur la surface de la pièce (1) à usiner,
caractérisé en ce que l'unité de commande effectue les étapes suivantes:
(a) détermination des éléments d'une matrice (m x n) constituée par la surface de la pièce (1),
(b) établissement d'un degré de recouvrement de la matrice (m x n),
(c) mise en place des éléments de la matrice (m x n) conformément au degré de recouvrement et à une valeur aléatoire en tant que points de traces (15),
(d) recherche d'un point de trace (15)
(e) définition d'un point de trace (15) adjacent,
(f) répétition de l'étape (e) jusqu'à ce qu'il n'y ait plus de point de trace (15)adjacent, et
(g) réalisation des étapes (d)-(f) jusqu'à ce que tous les points de traces (15) de la matrice (m x n) soient visés par le laser.

12. Procédé selon la revendication 11, caractérisé en ce que le positionnement des points de traces (15) s'effectue au moyen d'un générateur aléatoire, ce générateur aléatoire déterminant une valeur aléatoire qui est comparée au degré de recouvrement et en ce que l'élément respectif de la matrice (m x n) est positionné en tant que point de trace (15) lorsque la valeur aléatoire est plus petite que le degré de recouvrement.

13. Procédé selon la revendication 11 ou 12,
caractérisé en ce que les coordonnées des éléments de la matrice (m x n) sont translatées selon un facteur Off-lattice à l'intérieur d'un intervalle prédéterminé.
